Europäisches Patentamt

European Patent Office

Office européen des brevets

(11) Numéro de publication: **0 251 918 B1**

# FASCICULE DE BREVET EUROPEEN

(45) Date de publication de fascicule du brevet:
**17.04.91**

(51) Int. Cl.⁵: **G01D 5/242, H02K 29/12**

(21) Numéro de dépôt: **87401491.3**

(22) Date de dépôt: **29.06.87**

(54) **Capteur de position angulaire et ensemble de détermination de position angulaire muni de plusieurs de ces capteurs.**

(30) Priorité: **02.07.86 FR 8609613**

(43) Date de publication de la demande:
**07.01.88 Bulletin 88/01**

(45) Mention de la délivrance du brevet:
**17.04.91 Bulletin 91/16**

(84) Etats contractants désignés:
**BE DE GB IT SE**

(56) Documents cités:
**EP-A- 0 082 943**
**FR-A- 2 517 487**
**GB-A- 594 870**
**US-A- 1 744 609**
**US-A- 3 317 765**

(73) Titulaire: **COMMISSARIAT A L'ENERGIE ATO-MIQUE Etablissement de Caractère Scientifique Technique et Industriel**
**31/33, rue de la Fédération**
**F-75015 Paris(FR)BE DE GB SE**

Titulaire: **ECOLE NORMALE SUPERIEURE DE CACHAN**
**61, Avenue du Président Wilson**
**F-94230 Cachan(FR)BE DE GB IT SE**

(72) Inventeur: **Glaize, Christian**
**30, rue La Fontaine**
**F-92220 Bagneux(FR)**
Inventeur: **Lemarquand, Guy**
**20, rue des Artistes**
**F-75014 Paris(FR)**

(74) Mandataire: **Mongrédien, André et al**
**o/o BREVATOME 25, rue de Ponthieu**
**F-75008 Paris(FR)**

## Description

La présente invention a pour objet un capteur de position angulaire entre deux pièces coaxiales au repos ou en rotation relative présentant une réluctance magnétique variable en fonction de cette position angulaire. Elle a également pour objet un ensemble de détermination de position angulaire muni de plusieurs de ces capteurs.

Le besoin d'appareils de mesure de position angulaire très précis se fait sentir notamment en robotique où il est néessaire de déterminer avec précision l'angle de travail des articulations des bras des robots. Le contrôle de déplacements angulaires très fin peut être effectué grâce à une série de dispositifs, qui, couplés entre eux ou prolongés par des multiplicateurs d'angle (en particulier des engrenages), permettent de discrétiser les mouvements circulaires avec une grande précision.

Le procédé fondé sur la variation de réluctance magnétique consiste à faire passer un signal électrique alternatif dans un bobinage enserrant une structure ferromagnétique. Un flux magnétique est donc engendré, qui circule dans un circuit magnétique composé de deux pièces presque jointives et en déplacement relatif.

Le signal alternatif que l'on fait passer dans le circuit électrique dépend étroitement de ce flux magnétique qu'il peut donc caractériser. En fonction de leurs caractéristiques, les capteurs permettent d'obtenir la position relative des deux pièces composant le circuit magnétique.

Les appareils qui exploitent ce phénomène et l'appliquent à la détermination de position angulaire comprennent un rotor et un stator munis de dents séparées par un entrefer. La notion de stator et de rotor est toutefois peu significative pour cette application de capteurs de position angulaire, car ces deux concepts peuvent désigner aussi bien l'inducteur que l'induit, la pièce intérieure comme la pièce extérieure, ou même deux pièces disposées parallèlement de part et d'autre d'un entrefer plan. Cette remarque concerne aussi l'invention.

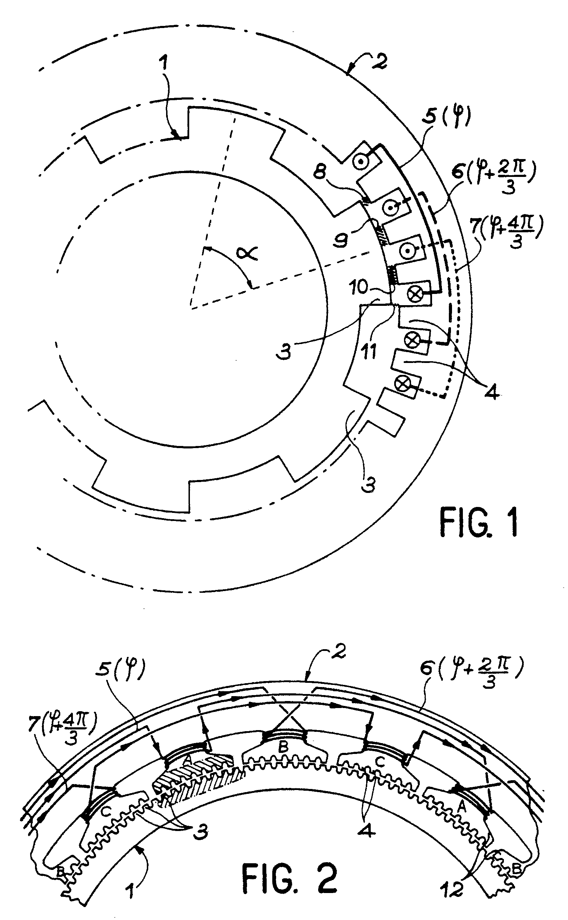

Les capteurs de position angulaire développés jusqu'ici et aptes à fournir des mesures de grande précision sont de deux types dont des exemples sont représentés figures 1 et 2. D'après le premier de ces exemples, la pièce ne portant pas les bobinages est munie de M motifs (plots ou dents) régulièrement répartis sur sa circonférence, alors que la pièce inductrice porte $n \times M$ motifs plus petits dont chaque groupe de n motifs est entouré d'un bobinage alimenté par un courant alternatif dont la phase diffère de $2\pi/n$ de celle qui alimente les bobinages voisins, à l'exception du bobinage diphasé pour lequel 4M motifs sont nécessaires.

Le capteur comprend donc des motifs répétitifs

décalés de $2\pi/M$ radians. On dit que l'angle électrique est égal à l'angle mécanique multiplié par M.

Si M est important, les mesures sont en principe plus précises, mais on aboutit vite à des limitations dues aux incertitudes d'usinage des pièces, surtout si on alimente par des courants polyphasés qui nécessitent des motifs plus nombreux sur la pièce munie des bobinages.

Un deuxième type de capteur, représenté figure 2 et tiré de l'article "A New High Accuracy Angular Position Transducer", PCIM, septembre 1985, pp. 55, par I.B. Cushing, montre M râteliers sur le rotor ou le stator munis chacun d'un nombre quasi-égal de dents. Les bobinages, disposés ici sur le stator, sont alimentés par des courants alternatifs polyphasés. La caractéristique majeure de ce capteur consiste en ce que les râteliers d'une des pièces ne sont pas espacés régulièrement, de telle sorte que les dents des râteliers portant les bobinages de même phase sont toujours disposées de manière semblable vis-à-vis des dents de l'autre pièce. De plus, une rotation du rotor qui amène un râtelier du stator à être disposé, vis-à-vis des dents du rotor, de la même façon qu'un autre râtelier du stator dans la position de départ, correspond à un angle électrique de $\alpha$, $\alpha$ étant le déphasage entre les courants qui alimentent les bobinages de ces deux râteliers du stator.

Le principe est donc le même que dans le cas précédent, et ici encore les tolérances de fabrication imposent des limitations pratiques au nombre de motifs que l'on peut disposer.

Le document EP-A-0 082 943 décrit un capteur magnétique construit de manière à éliminer l'influence du champ magnétique uniforme dans lequel il est plongé et où le rotor et le stator sont munis, dans les réalisations représentées, du même nombre de dents régulièrement réparties. Au moins un bobinage est enroulé autour d'une paire de dents diamétralement opposées du stator. Ce capteur est cependant envisagé dans la description en tant que capteur de vitesse et il ne se prête de toute façon pas à des mesures précises de position angulaire.

La présente invention permet de tourner cette limitation au moyen d'un capteur de position angulaire de fabrication simple constitué suivant la définition de la revendication 1 ; selon un mode de réalisation préféré de cette invention, plusieurs de ces capteurs sont associés en parallèle et forment un ensemble de détermination de position angulaire qui permet d'obtenir un pas angulaire plus fin.

On obtient alors un ensemble de détermination de position angulaire de deux pièces coaxiales, caractérisé en ce qu'il comprend une pluralité de capteurs comme définis ci-dessus, des liaisons mécaniques entre les rotors d'une part, les stators d'autre part, de telle sorte que l'angle de décalage entre les dents du rotor et celles du stator d'un capteur quelconque est différent de l'angle correspondant des autres capteurs, et un ensemble électronique pour combiner les signaux issus des systèmes électroniques des différents capteurs.

Selon un mode préféré de réalisation de l'ensemble de détermination de position angulaire selon l'invention, l'angle de décalage entre les dents du rotor et du stator d'un capteur quelconque peut se déduire de l'angle correspondant chez tout autre capteur par addition ou soustraction du quotient de $2\pi$ par le produit du nombre de dents du rotor et du nombre de capteurs, ou par un multiple de ce quotient inférieur au résultat de la division de $2\pi$ par le nombre de dents du rotor, ce quotient ou tout multiple ainsi défini représentant de plus la différence de décalage entre les dents du stator ou du rotor de deux des capteurs utilisés ; une exception existant toutefois dans le cas de deux capteurs dont le décalage entre les dents du stator et du rotor différera de préférence du quotient de $\pi/2$ ou de $2\pi/3$ par le nombre de dents du rotor.

Une réalisation avantageuse des dents est définie par la revendication 2.

De toute manière, l'invention sera mieux comprise à l'aide du commentaire des figures énumérées ci-dessous et données à titre illustratif et non limitatif :

- la figure 1 représente une vue axiale d'un capteur selon l'art antérieur,
- la figure 2 représente une vue axiale d'un autre capteur selon l'art antérieur,
- la figure 3 représente une vue axiale d'un capteur utilisé pour l'invention,
- la figure 4 représente une perspective simplifiée d'un réalisation posible de l'invention,
- la figure 5 représente une coupe diamétrale d'un autre mode de réalisation de l'invention,
- les figures 6 à 8 représentent divers types de signaux susceptibles d'être obtenus par des machines à réluctance.

La figure 1 représente donc un appareil d'un type connu composé d'un rotor 1 pourvu de M dents 3 et d'un stator 2 pourvu de 3×M dents 4.

Trois bobinages 5, 6 et 5 sont alimentés par un courant triphasé.

Chaque dent 3 est donc placée en regard de trois dents 4 ; une rotation du rotor 1 d'un angle $\alpha = 2\pi/M$ permet d'obtenir une configuration identique, ce qui correspond à un angle électrique de $2\pi$. Si la rotation du rotor 1 est moins importante, la position relative du rotor 1 et du stator 2 se trouve modifiée : les flux magnétiques qui passent par les entrefers tels que 8, 9, 10 et 11 sont modifiés en intensité par suite de la variation de perméance entre les dents du stator 2 et du rotor 1. Il en résulte que la tension aux bornes des bobinages 5, 6 et 7 -en supposant l'intensité constante- varie continûment au cours d'une rotation du rotor 1, avec une période correspondant à l'angle $\alpha$. La loi de cette variation est très difficile à formuler à cause de la complexité des phénomènes et dépend largement des géométries des dents 3 et 4 (entrefer, hauteur, étendue de l'arc embrassé, formes relatives de ces dents) ainsi que de la position des bobinages 5 à 7. Il est toutefois possible d'obtenir des variations pratiquement sinusoïdales de cette intensité en fonction de l'angle de rotation, ce qui est très avantageux pour l'exploitation des mesures.

La figure 2 représente un autre exemple connu permettant d'obtenir un angle électrique de $2\pi$ correspondant à une fraction de l'angle de périodicité mécanique. Ici, les dents 4 du rotor 2 sont portées par des râteliers 12 qui les distribuent en groupes alimentés par des tensions électriques triphasées. On remarque que dans cette position, les dents 4 des râteliers 12 désignés par B sont en face des dents 3 du rotor 1, contrairement aux dents des râteliers A et C ; le décalage angulaire des dents A par rapport aux dents 3 est égal au tiers de l'angle qui sépare deux dents 3 consécutives, celui des dents C est égal aux deux tiers de cet angle, ce qui est lié au déphasage électrique de $2\pi/3$ entre ces trois groupes : il faut donc les décaler de l'angle mécanique correspondant à ce décalage, c'est-à-dire $2\pi/3M$, où M est le nombre de dents 3.

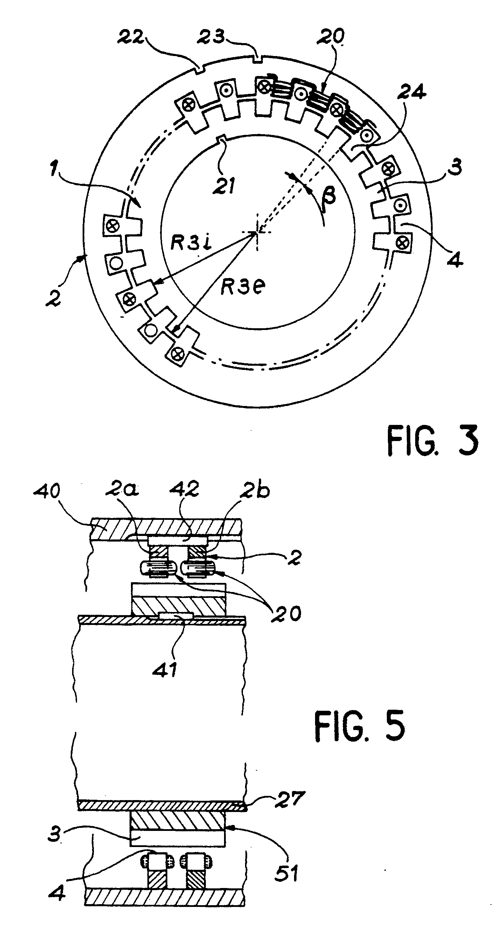

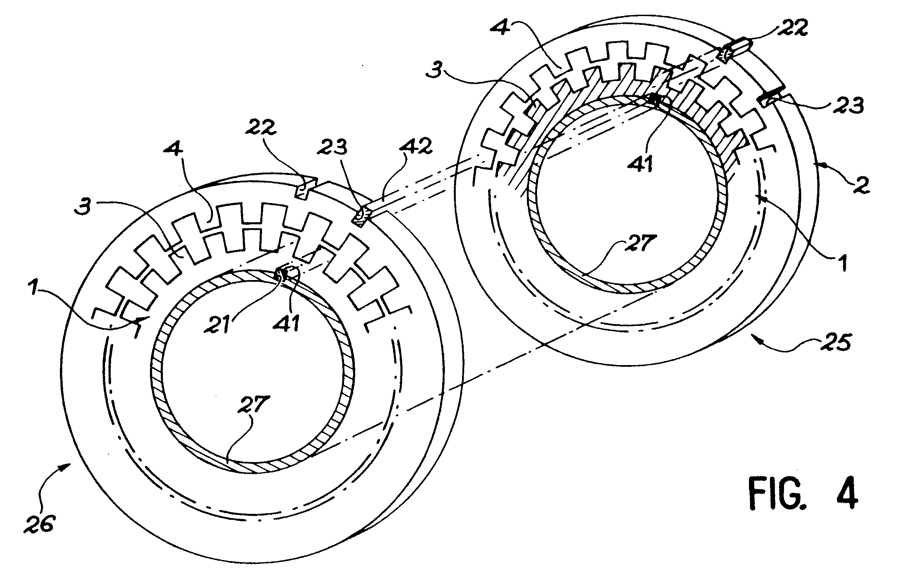

Cette figure 2, qui représente une réalisation concrète d'un capteur angulaire, donne une idée des précisions que l'on peut espérer obtenir, ce qui a pour contrepartie un usinage délicat et coûteux du rotor 2. C'est pourquoi les capteurs utilisés pour l'invention et représentés figure 3 renoncent à cette disposition et comprennent un rotor 1 et un stator 2, munis certes comme précédemment de dents 3 et 4 respectivement ; par contre ici, les dents du stator et du rotor sont en nombre égal M et régulièrement réparties, et il n'existe qu'un seul bobinage 20 disposé autour de toutes les dents, ici les dents 4 du stator 2, et dont les spires sont enroulées dans des sens opposés pour des dents 4 consécutives, de sorte que les pôles magnétiques définis par les dents sont de signes alternés le long du stator 2. On pourrait toutefois envisager un bobinage en plusieurs parties, à condition que ces parties présentent toutes encore des enroulements autour de toutes les dents. Le courant électrique est donc monophasé. Le rotor 1 est évidé et muni d'une rainure de clavette 21 sur son diamètre intérieur, le stator 2 de deux rainures de clavette 22 et 23 sur son diamètre extérieur. Les clavettes utilisées à cette fin portent respectivement les références 41 et 42 (figure 4).

Avant de poursuivre la description de l'invention, il convient de rappeler ce qui a été dit plus haut de façon générale à propos de ces capteurs : le rotor peut être à l'intérieur ou à l'extérieur du stator, ou même à côté de celui-ci sur le même arbre, l'entrefer étant alors plan ; de même, le bobinage peut être porté par le stator ou par le rotor. D'une façon générale, les termes "stator" et "rotor" ont été utilisés pour alléger la présente description et ne sauraient être interprétés de manière à restreindre le cadre de l'invention.

Au cours de la rotation du rotor 1, la forme de l'entrefer 24 est modifiée et, comme pour les exemples précédents, la perméance du circuit magnétique constitué par le stator 1 et le rotor 2 varie, ainsi que le courant qui circule dans la bobine 20. Il n'est toutefois plus possible d'obtenir un signal dont la tension varie de façon presque sinusoïdale en fonction de l'angle électrique $\theta$, c'est-à-dire $v = v_1 \cos\theta \sin\Omega t$, où $\Omega$ est la pulsation du signal alternatif. Avec le capteur de la figure 3, on obtient un résultat dont la décomposition en série de Fourier donne $v = (v_0 + v_1 \cos\theta + ... + v_i \cos \ i\theta + ...) \sin\Omega t$. L'idéal serait de pouvoir annuler tous les $v_i$ autres que $v_1$ ; c'est impossible en ce qui concerne $v_0$, par contre l'influence des termes $v_2$, $v_3$, etc. peut être réduite grâce à une géométrie judicieuse des dents. Les simulations sur ordinateur qui ont été effectuées ont permis de dégager les règles suivantes, valables pour M dents 3 disposées régulièrement sur le rotor 1 et de forme, vue axialement, limitée sensiblement par un segment d'arc extérieur de rayon R3e, un segment d'arc intérieur de rayon R3i et deux segments de deux rayons espacés d'un angle $\beta$ :
- le rapport $(R3e-R3i)/\beta R3e$, où $\beta$ est exprimé en radians, doit être compris entre 0,5 et 2,
- l'angle $\beta \times M$ doit être compris entre $\pi/3$ et $\pi$ radians.

Le respect de ces proportions, valables également pour les dents 4 du stator 2, permet de diminuer sensiblement les coefficients $v_2$, $v_3$, etc. et on arrive pratiquement à une tension $v = (v_0 + v_1 \cos\theta)\sin\Omega t$ si l'intensité du courant est constante, et dont l'exploitation est bien plus simple. On peut aussi, sans sortir du cadre de l'invention, délivrer un signal de tension constante et c'est alors son intensité qui varie de façon quasi-sinusoïdale en fonction de $\theta$ à une constante près ($i = \{i_0 + i_1 \cos\theta + ... + i_n \cos n\ \theta\} \sin\Omega t$) : le traitement électronique de ce signal est le même.

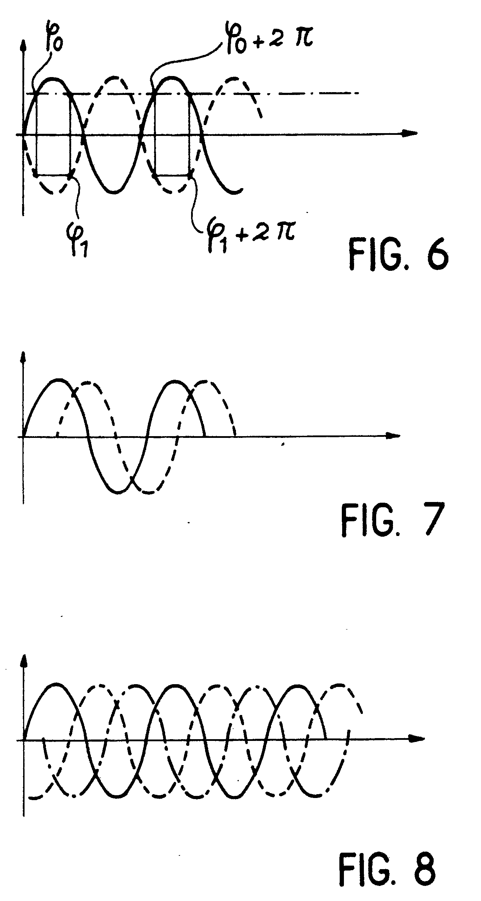

La figure 4 représente deux capteurs 25 et 26 semblables et du type décrit figure 3. Les deux rotors sont placés sur un arbre 27 avantageusement creux de manière à limiter le poids et à permettre le passage de câbles électriques. Les rainures de clavette 21 assurent l'alignement des dents 3 des deux rotors 1. Par contre, un décalage angulaire des stators est effectué par alignement des rainures de clavette 22 de l'un et 23 de l'autre sur une enveloppe 40 représentée figure 5. L'angle que font ces rainures 22 et 23 n'est pas indifférent et est égal généralement au quotient de $2\pi$ par M et par le nombre de captures utilisés, ou par un multiple de cette valeur, de façon à obtenir que les angles électriques des différents stators soient régulièrement répartis de 0 à $2\pi$ et tous différents : dans le cas, non représenté ici, de trois capteurs à trente dents, les décalages seraient de $2\pi/3$ pour l'angle électrique, $2\pi/90$ pour l'angle mécanique ; en vue de la fabrication en série, le stator de chaque capteur pourrait être muni de trois rainures de clavette décalées de $2\pi/90$ et $2\pi/45$ (modulo $2\pi/30$ par rapport à la première d'entre elles). Les signaux fournis par les trois capteurs en fonction de la rotation des rotors seraient représentés par la figure 8 si on suppose que leur réponse est non seulement périodique mais sinusoïdale.

Toutefois, il existe une exception quand les capteurs sont au nombre de deux. L'application du principe exposé ci-dessus aboutirait à placer les deux capteurs à un angle électrique égal à $2\pi/2$. La figure 6 montre alors que des angles électriques $\psi 0$ et $\psi 1$ non espacés de $2\pi$ fournissent le même signal sur les deux capteurs. La correspondance biunivoque entre les signaux et l'angle électrique est donc perdue. C'est pourquoi les stators doivent être décalés d'un angle électrique différent. La valeur de $\pi/2$ est la plus généralement choisie, quoique $2\pi/3$ soit aussi utilisé. On obtient alors des signaux du type représenté figure 7.

La figure 5 représente une variante de cette réalisation de l'invention selon une vue en coupe diamétrale. D'une façon générale, le centrage du rotor 1 sur le stator 2 ne doit pas nécessairement être très précis avec cette construction grâce à l'identité du rôle de toutes les dents : les défauts de positionnement, de circularité et de répartition angulaire des dents 3 et 4 sont beaucoup moins dommageables qu'avec les dispositifs représentés figure 1 et 2. On peut accepter que le centrage soit effectué par des roulements à billes, non représentés ici, disposés sur l'arbre 27 et l'enveloppe 40 ; le dispositif de détermination de position angulaire se limite essentiellement aux capteurs 25 et 26, il est donc très léger.

On peut beaucoup diminuer l'influence du décalage axial entre les stators 2 et les rotors 1 en augmentant la longueur de ceux-ci ; on est ainsi sûr de ne pas diminuer de façon erronée la perméance du circuit magnétique. On peut encore, comme le représente la figure 5, n'employer qu'un seul rotor 51 de longueur suffisante pour être en regard des deux stators 2a et 2b à la place des deux rotors individuels 1. Le montage et la fabrication du capteur en sont encore simplifiés.

Il est encore possible de réaliser l'ensemble de détermination de position angulaire de manière un peu différente et non représentée ici, en ajoutant pour chaque capteur 25, 26 un autre bobinage monophasé autour des dents 3 des rotors 1 ou 51 : l'un des bobinages est alors utilisé pour l'alimentation électrique (nécessairement celui du rotor 51 dans les réalisations où ce rotor est unique, comme c'est le cas sur la figure 5), l'autre bobinage de chaque capteur 25, 26 reste utilisé pour recueillir les signaux électriques induits.

On peut enfin utiliser isolément un capteur 25 tel que celui décrit figure 3 : la tension aux bornes du bobinage 20 et l'intensité du signal qui le parcourt peuvent être comparées par l'intermédiaire d'un circuit dérivé, composé par exemple d'une résistance fixe qui fait correspondre une intensité à la tension aux bornes du bobinage 20. La comparaison porte alors sur l'intensité du signal qui parcourt ce bobinage 20 et l'intensité du signal qui parcourt le circuit dérivé.

L'inconvénient de l'emploi d'un capteur 25 isolé consiste en ce qu'on ne peut effectuer des mesures que sur un angle électrique égal à π, car il y a indétermination si on veut mesurer sur des intervalles plus grands. De plus, la précision obtenue avec un seul capteur 25 sera beaucoup moins bonne.

Dans toutes ces réalisations de l'invention, l'exploitation électronique des signaux obtenus se fait au moyen de circuits déjà connus, tels ceux indiqués dans l'ouvrage "Synchro Conversion Handbook", ILC Data Device Corporation, 1982.

Le capteur 25 de position angulaire présente ainsi divers avantages. Sa forme est très simple et ne nécessite pas une fabrication compliquée. En outre, le choix d'un bobinage monophasé permet de limiter les conséquences d'une mauvaise coaxialité des axes des pièces 27, 40 supportant le rotor 1 et le stator 2 ou d'irrégularités d'usinage des dents 3 et 4 : les erreurs ainsi engendrées sont moyennées sur tout l'entrefer 24 et donc largement atténuées.

Des avantages supplémentaires sont apportés par l'emploi d'un ensemble de position angulaire composé d'une pluralité de ces capteurs 25 : il est possible d'obtenir des discrétisations angulaires plus fines, et d'autre part, l'emploi d'un seul rotor débordant 51 limite les conséquences d'un mauvais positionnement axial des pièces porteuses 27 et 40. Le nombre de capteurs 25 que l'on peut disposer en parallèle n'est théoriquement pas limité, mais comme le réglage par les clavettes 41 et 42 est très précis, ce nombre est certainement élevé en pratique. On doit donc pouvoir obtenir des mesures de position angulaire très précises grâce à l'invention, qui est donc susceptible d'être très utile notamment en robotique.

**Revendications**

1. Capteur de position angulaire de deux pièces coaxiales (27, 40) comprenant un stator (2) et un rotor (1) ferromagnétiques séparés par un entrefer, dans lequel le stator (2) et le rotor (1) sont pourvus du même nombre de dents (3, 4) disposées régulièrement, le capteur comprenant en outre au moins un bobinage (20) monophasé, un système électronique étant capable de mesurer la modulation d'un signal électrique parcourant chaque bobinage, caractérisé en ce que chacun des bobinages est individuellement enroulé autour de toutes les dents du stator (2) ou du rotor (1), alimenté par un courant alternatif et permet de mesurer la réluctance magnétique du circuit composé du rotor, du stator et de l'entrefer.

2. Capteur de position angulaire suivant la revendication 1, caractérisé en ce que les dents (3, 4) du rotor et du stator sont des sections, vues en direction axiale, limitées sensiblement par un segment d'arc extérieur, un segment d'arc intérieur et deux segments de deux rayons, le rapport entre la distance entre les deux segments d'arc et la longueur du segment d'arc extérieur étant compris entre 0,5 et 2 pour chaque dent, l'arc total embrassé par les dents étant compris entre π/3 et π.

3. Capteur de position angulaire suivant l'une quelconque des revendications 1 ou 2, caractérisé en ce que les spires des bobinages sont enroulées en sens opposés pour des dents consécutives.

4. Ensemble de détermination de position angulaire de deux pièces coaxiales (27, 40) munies de capteurs de position angulaire suivant l'une quelconque des revendications 1 à 3, caractérisé en ce qu'il comprend une pluralité desdits capteurs (25, 26), des moyens de liaison mécanique (41, 42) entre les rotors (1) d'une part, les stators (2) d'autre part, de telle sorte que l'angle de décalage entre les dents (3 et 4) du rotor (1) et celles du stator (2) d'un capteur (25) quelconque est différent de l'angle correspondant des autres capteurs, et un ensemble électronique pour combiner les signaux issus des systèmes électroniques des différents capteurs (25). .

5. Ensemble de détermination angulaire suivant la revendication 4, caractérisé en ce qu'il comprend au moins trois capteurs (25) et en ce que l'angle de décalage entre les dents (3 et 4) du rotor (1) et du stator (2) d'un capteur (25) quelconque peut se déduire de l'angle correspondant chez tout autre capteur (25) par addition ou soustraction du quotient de $2\pi$ par le produit du nombre de dents (3) du rotor (1) et du nombre de capteurs (25), ou par un multiple de ce quotient inférieur au résultat de la division de $2\pi$ par le nombre de dents (3) du rotor (1), ce quotient ou tout multiple ainsi défini représentant de plus la différence de décalage entre les dents (3 et 4) du rotor (1) ou du stator (2) de deux des capteurs (25, 26) utilisés.

6.  Ensemble de détermination angulaire suivant la revendication 4, caractérisé en ce qu'il comprend deux capteurs (25, 26) et en ce que la différence d'angle de décalage entre les dents (3 et 4) du rotor (1) et du stator (2) des deux capteurs (25, 26) est égale au quotient de $\pi/2$ ou $2\pi/3$ divisé par le nombre de dents.

7.  Ensemble de détermination de position angulaire suivant l'une quelconque des revendications 4 à 6, caractérisé en ce que les dents (3) des rotors (1) sont en prolongement de celles des autres rotors.

8.  Ensemble de détermination de position angulaire suivant l'une quelconque des revendications 4 à 7, caractérisé en ce qu'il comprend un seul rotor (51) assez long pour que ses dents (3) puissent venir en regard des dents (4) de tous les stators (2).

## Claims

1.  Angular position sensor for coaxial parts (27,40) comprising a ferromagnetic stator (2) and rotor (1) separated by an air gap, in which the stator (2) and the rotor (1) are provided with the same number of regularly arranged teeth (3,4), the sensor also having at least one single-phase coil (20), an electronic system being able to measure the modulation of an electric signal passing through the said coil, characterized in that each of the coils is individually wound around all the teeth of the stator (2) or the rotor (1), supplied by an alternating current and makes it possible to measure the magnetic reluctance of the circuit constituted by the rotor, the stator and the air gap.

2.  Angular position sensor according to claim 1, characterized in that the teeth (3,4) of the stator and the rotor have sections, viewed in an axial direction, which are essentially limited by an external arc segment, an internal arc segment and two segments of two radii, the ratio between the distance between the two arc segments and the length of the external arc segment being between 0.5 and 2 for each tooth, the total arc covered by the teeth being between $\pi/3$ and $\pi$.

3.  Angular position sensor according to either of the claims 1 or 2, characterized in that the turns of the coils,are wound in opposite directions for consecutive teeth.

4.  Means for the angular position determination of two coaxial parts (27,40) provided with angular positioning sensors according to any one of the claims 1 to 3, characterized in that it comprises a plurality of the said sensors (25,26), mechanical connection means (41,42) between the rotors (1) on the one hand and the stators (2) on the other, so that the displacement angle between the teeth (3,4) of the rotor (1) and those of the stator (2) of a random sensor (25) differs from the corresponding angle of the other sensors, as well as an electronic means for combining the signals from the electronic systems of the different sensors (25).

5.  Angular determination means according to claim 4, characterized in that it comprises at least three sensors (25) and in that the displacement angle between the teeth (3,4) and the rotor (1) and the stator (2) of a random sensor (25) can be deduced from the corresponding angle in any other sensor (25) by the addition or subtraction of the quotiant of $2\pi$ by the product of the number of teeth of the rotor (2) and the number of sensors (25), or by a multiple of said quotiant smaller than the result of the division of $2\pi$ by the number of teeth (3) of the rotor (1), said quotiant or any multiple defined in this way also representing the displacement difference between the teeth (3,4) of the rotor (1) or the stator (2) of two of the sensors (25,26) used.

6.  Angular determination means according to claim 4, characterized in that it comprises two sensors (25,26) and in that the displacement angle difference between the teeth (3,4) of the rotor (1) and the stator (2) of the two sensors (25,26) is equal to the quotient of $\pi2$ or $2\pi/3$ divided by the number of teeth.

7.  Angular position determination means according to any one of the claims 4 to 6, characterized in that the teeth (3) of the rotors (1) constitute extensions of those of the other rotors.

8. Angular position determination means acccrding to any one of the claims 4 to 7, characterized in that it comprises a single relatively long rotor (51) so that the teeth (3) can be positioned facing the teeth (4) of all the stators (2).

**Ansprüche**

1. Winkelpositionsaufnehmer aus zwei koaxialen Teilen (27, 40) mit einem ferromagnetischen Stator (2) und einem durch einen Luftspalt getrennten, ferromagnetischen Rotor (1), in dem der Stator (2) und der Rotor (1) mit einer gleichen Zahl von regelmäßig angeordneten Zähnen (3, 4) versehen sind, wobei der Aufnehmer außerdem wenigstens eine einphasige Spule (20) umfaßt, wobei ein elektronisches System in der Lage ist, die Modulation eines elektrischen, jede Spule durchlaufenden Signals zu messen, dadurch gekennzeichnet, daß jede der Spulen einzeln um alle Zähne des Stators (2) oder des Rotors (1) gewickelt ist, von einem Wechselstrom gespeist wird und erlaubt, die magnetische Reluktanz des aus dem Rotor, dem Stator und dem Luftspalt bestehenden Kreises zu messen.

2. Winkelpositionsaufnehmer nach Anspruch 1, dadurch gekennzeichnet, daß die Zähne (3, 4) des Rotors und des Stators in der axialen Richtung gesehen Abschnitte sind, die im wesentlichen von einem äußeren Kreisbogenstück, einem inneren Kreisbogenstück und zwei Segmenten von zwei Strahlen begrenzt werden, wobei das Verhältnis zwischen dem Abstand zwischen den beiden Kreisbogenstücken und der Länge des äußeren Kreisbogenstücks für jeden Zahn zwischen 0,5 und 2 liegt, wobei der gesamte von den Zähnen umgebene Kreisbogen zwischen $\pi/3$ und $\pi$ liegt.

3. Winkelpositionsaufnehmer nach einem der Ansprüche 1 oder 2, dadurch gekennzeichnet, daß die Windungen der Spulen für aufeinanderfolgende Zähne im entgegengesetzten Sinne aufgewickelt sind.

4. Anordnung zum Bestimmen der Winkelposition von zwei koaxialen Teilen (27, 40) die mit Winkelpositionsaufnehmern nach einem der Ansprüche 1 bis 3 versehen sind, dadurch gekennzeichnet, daß sie aufweist: eine Mehrzahl von Aufnehmern (25, 26); Vorrichtungen (41, 42) zur mechanischen Verbindung zwischen den Rotoren (1) auf der einen Seite und den Statoren auf der anderen Seite, so daß der Versetzwinkei zwischen den Zähnen (3 und 4) des Rotors (1) und denen des Stators (2) eines beliebigen Aufnehmers (25) von dem den anderen Aufnehmern entsprechenden Winkel verschieden ist; und eine elektronische Vorrichtung zum Kombinieren der von den elektronischen Systemen der verschiedenen Aufnehmer (25) herrührenden Signale.

5. Vorrichtung zur Bestimmung der Winkelposition nach Anspruch 4, dadurch gekennzeichnet, daß sie wenigstens drei Aufnehmer (25) umfaßt und daß der Versetzwinkel zwischen den Zähnen (3 und 4) des Rotors (1) und des Stators (2) eines beliebigen Aufnehmers (25) sich aus dem entsprechenden Winkel bei jedem anderen Aufnehmer (25) durch Addition oder Subtraktion des Quotienten aus $2\pi$ durch das Produkt aus der Zahl der Zähne (3) des Rotors (1) und der Zahl der Aufnehmer (25) oder durch ein Vielfaches dieses Quotienten kleiner als das Ergebnis der Division von $2\pi$ durch die Zahl der Zähne (3) des Rotors (1) herleiten läßt, wobei dieser Quotient oder jedes so definierte Vielfache außerdem den Versetzunterschied zwischen den Zähnen (3 und 4) des Rotors (1) oder des Stators (2) von zweien der verwendeten Aufnehmer (25, 26) darstellt.

6. Vorrichtung zur Bestimmung der Winkelposition nach Anspruch 4, dadurch gekennzeichnet, daß sie zwei Aufnehmer (25, 26) umfaßt und daß die Versetzwinkeldifferenz zwischen den Zähnen (3 und 4) des Rotors (1) und des Stators (2) der beiden Aufnehmer (25, 26) gleich dem Quotienten von $\pi/2$ oder $\pi/3$ geteilt durch die Zahl der Zähne ist.

7. Vorrichtung zur Bestimmung der Winkelposition nach einem der Ansprüche 4 bis 6, dadurch gekennzeichnet, daß die Zähne (3) der Rotoren (1) in der Verlängerung derjenigen der anderen Rotoren sind.

8. Vorrichtung zur Bestimmung der Winkelposition nach einem der Ansprüche 4 bis 7, dadurch gekennzeichnet, daß sie einen einzigen Rotor (51) umfaßt, der lang genug ist, damit seine Zähne (3) gegenüber den Zähnen (4) aller Statoren (2) zu liegen kommen.

**FIG. 1**

**FIG. 2**

FIG. 3

FIG. 5

FIG. 4

EP 0 251 918 B1

FIG. 6

FIG. 7

FIG. 8